Europäisches Patentamt

European Patent Office

Office européen des brevets

(11) Publication number: 0 374 794
A2

# EUROPEAN PATENT APPLICATION

(21) Application number: 89123387.6

(51) Int. Cl.5: **H04J 3/06**

(22) Date of filing: 18.12.89

(30) Priority: 19.12.88 JP 321039/88

(43) Date of publication of application:
27.06.90 Bulletin 90/26

(84) Designated Contracting States:
DE FR GB

(71) Applicant: Matsushita Electric Industrial Co.,
Ltd.
1006, Oaza Kadoma
Kadoma-shi Osaka-fu, 571(JP)

(72) Inventor: Hirota, Yutaka
1-7-21, Ueno Higashi
Toyonaka-shi Osaka(JP)

(74) Representative: Grupe, Peter, Dipl.-Ing. et al
Patentanwaltsbüro
Tiedtke-Bühling-Kinne-Grupe-Pellmann-Gra-
ms-Struif Bavariaring 4
D-8000 München 2(DE)

(54) Digital transmitting/receiving apparatus using buffer memory to eliminated effects of jitter.

(57) A digital signal transmitting and receiving apparatus includes a transmitting unit (51) producing a
transmitted digital signal which is formatted to enable self-clocking operation of a receiving unit (52),
and a recovered clock signal generated thereby in
the receiving unit is used in writing successive received data values into a buffer memory (56).
Readout of data from the buffer memory is based on
a fixed-frequency clock signal which is independent
of the recovered clock signal, so that an output data
signal can be obtained which is free from the effects
of jitter contained in the input digital signal supplied
to the receiving unit.

*FIG.4*

# DIGITAL TRANSMITTING/RECEIVING APPARATUS USING BUFFER MEMORY TO ELIMINATED EFFECTS OF JITTER

## BACKGROUND OF THE INVENTION

The present invention relates to a digital apparatus for transmitting and receiving a digital signal in which a receiving unit receives a transmitted digital signal and executes analog/digital conversion of the digital signal using a self-clocking method, but in which the effects of jitter in the digital signal supplied to the receiving unit are completely eliminated.

Various types of digital apparatus have been developed in recent years such as compact disk players and DAT (digital audio tape) players, in which information is generated in the form of a digital signal. There is an increasing trend towards transferring such a digital signal, in digital form, to other devices such as amplifier/loudspeaker units (in each of which the digital signal is converted to an analog audio signal and amplified), rather than first converting the original digital signal to an analog signal which is then transferred to other devices such as audio amplifiers etc. Such a transfer of a digital signal rather than an analog signal has various advantages which are well known in the art.

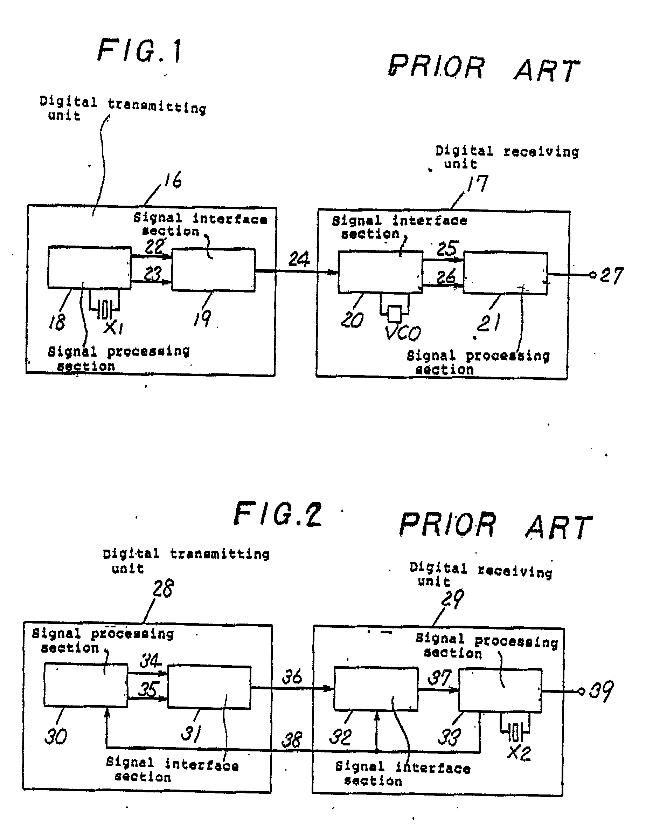

The basic features of a prior art example of such a digital apparatus in which a digital signal is transmitted and received will be described referring first to Fig. 1. Here, a first digital unit 16 (such as a CD player) generates a digital signal which is transmitted to a second digital unit 17 (e.g. a digital/analog converter circuit for producing an analog audio signal). In the digital receiving unit 17, a signal processing section 18 executes signal processing of a playback digital signal that is produced within the CD player, with the operation of the signal processing section 18 being based on a master clock signal that is generated by a quartz crystal oscillator whose operating frequency is determined by a quartz crystal vibrator X1. A digital data signal that is outputted from the signal processing section 18 is supplied via a signal line 22 to a signal interface section 19, and a clock signal that is produced from the signal processing section 18 is transferred via a signal line 23 to the signal interface section 19. The signal interface section 19 functions to convert the digital data signal from the signal processing section 18 to a transmission digital signal which is in the digital audio interface format.

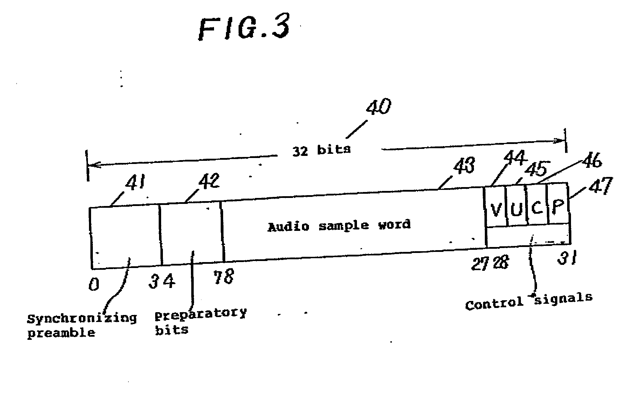

The digital audio interface format will be briefly described referring to Fig. 3. In Fig. 3, a 32-bit block of the transmitted signal is shown, which conforms to the digital audio interface format. The signal block is made up of a set of four preamble bits 41, four preparatory bits 42, a set of twenty audio sample word bits 43, and four control signal bit groups 44, 45, 46 and 47 each of which consists of four bits. It is a feature of this format that, simply by sending such a 32-bit signal blocks, a receiving apparatus can extract a recovered clock signal from the received bit stream, and utilize that clock signal for demodulating the received digital signal, i.e. self-clocking operation of the receiving apparatus becomes possible.

The signal interface section 19 of the digital transmitting unit 16 converts the data signal from the signal processing section 18 into a digital signal which is in the digital audio interface format, with the basic clock signal frequency component of that digital signal being the clock signal that is supplied to the signal interface section 19 from the signal processing section 18. The digital signal thus produced from the signal interface section 19 is transferred via a signal line 24 to the digital receiving unit 17. In the digital receiving unit 17, the frequency of oscillation of a VCO (voltage controlled oscillator) is controlled by the clock signal component of the transmitted digital signal, and the output signal from this VCO is utilized to produce a recovered clock signal having an average frequency that is identical to that of the clock signal produced by the signal processing section 18 of the digital transmitting unit 16. The signal interface section 20 utilizes this clock signal to convert the received digital signal from the digital transmitting unit 16 back to the original digital data signal which as produced from the signal processing section 18 of the digital transmitting unit 16 as described above. The recovered clock signal and the recovered digital data signal are outputted from the signal interface section 20, on signal lines 25 and 26 respectively, and transferred to a signal processing section 21 of the digital receiving unit 17. In the signal processing section 21, the recovered clock signal is used to convert the digital data signal to an analog audio output signal, which is supplied to an output terminal 27.

As stated above, the VCO of the 20 is used in generating a recovered clock signal whose average frequency is identical to that of the clock signal component of the received digital signal from the digital transmitting unit 16. However in practice, this received digital signal will contain jitter, i.e. will exhibit time-axis fluctuations. As a result, the recovered clock signal that is derived based on the VCO output signal will have a jitter component, and this causes a deterioration of quality of the analog audio signal that is obtained as output from the digital receiving unit 17.

In order to overcome this problem, the configuration shown in Fig. 2 has been used in the prior art. IN this case, signals are transmitted in both directions between a digital receiving unit 29 and a digital receiving unit 29. The digital receiving unit 29 sends a synchronising signal to the digital transmitting unit 28, with this synchronising signal being generated by a quartz crystal oscillator within a signal processing section 33 of the digital receiving unit 29. The basic operation of the digital receiving unit 29 is based upon this synchronising signal (e.g. which can be a clock signal that is used in demodulating the received digital signal), the effects of jitter can be substantially eliminated.

More specifically, the operation of the apparatus of Fig. 2 is as follows. The digital transmitting unit 28 includes a signal processing section 30 and a signal interface section 31. The digital transmitting unit 28 produces an output digital data signal that is supplied via a signal line 34 to the signal interface section 31, and a clock signal that is supplied via a signal line 35 to the signal interface section 31. The digital receiving unit 29 includes a signal interface section 32 which produces an output digital signal that is supplied to the signal processing section 33 via a signal line 37. The signal processing section 33 converts this output digital signal from the signal line 37 to an analog audio signal, which is supplied to an output terminal 39. The entire system of Fig. 2 operates based on a master clock signal which is generated using an output signal of a quartz crystal oscillator within the 33, whose frequency is determined by a quartz crystal vibrator X2. This clock signal constitutes the aforementioned synchronising signal, which is supplied to the signal interface section 32 and the signal processing section 30, i.e. the digital transmitting unit 28 is operated as a slave device of the digital receiving unit 29. As a result, the reproduced analog audio signal that is outputted from the digital receiving unit 29 can be made free from the effects of jitter.

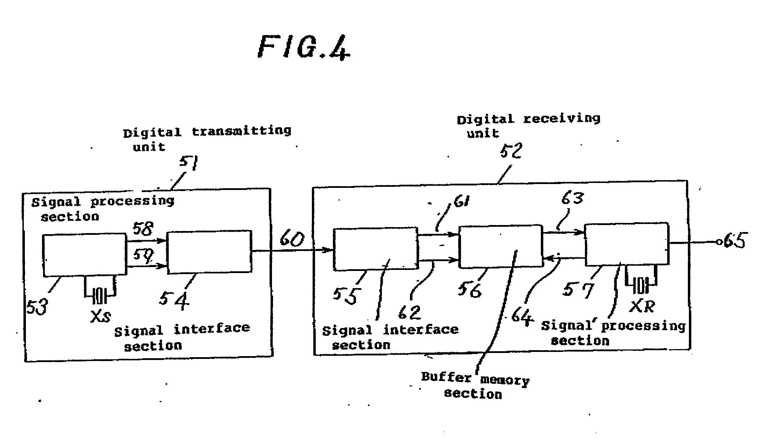

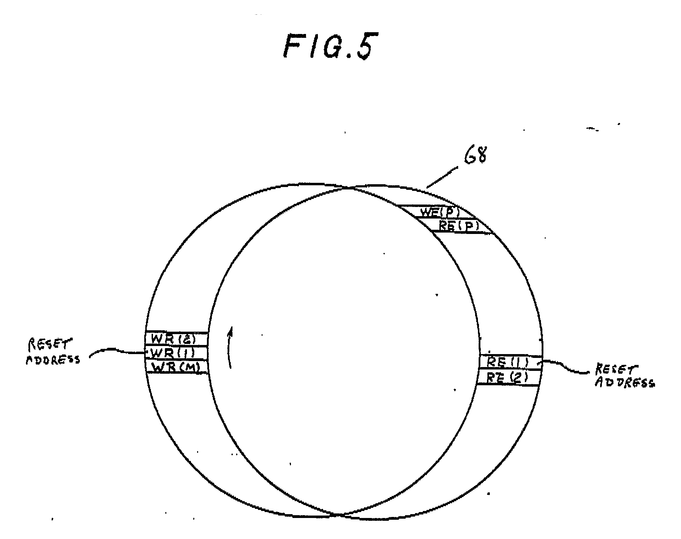

Each of the above prior art types of digital apparatus has disadvantages. IN the case of the apparatus of Fig. 4 which uses a self-clocking method of deriving a clock signal in the receiving unit, as described above, deteriorartion of audio signal quality occurs as a result of jitter in the received digital signal. In the case of the apparatus of Fig. 5, although the effects of jitter can be substantially eliminated, the digital transmitting unit 28 can only be connected to a single digital receiving unit 29, and cannot supply the digital signal in common to a plurality of different receiving units via respective signal lines. This greatly restricts the range of applicability of such a system.

## SUMMARY OF THE INVENTION

It is an objective of the present invention to overcome the disadvantages of the prior art described above by providing a digital signal transmitting and receiving apparatus whereby the effects of jitter in a received digital signal are completely eliminated, yet whereby a plurality of receiving units can be connected in common to a single digital transmitting unit.

To achieve the above objectives, a digital signal transmitting and receiving apparatus according to the present invention comprises a digital transmitting unit and at least one digital receiving unit which is coupled to receive a digital signal that is transmitted by the digital transmitting unit, and is characterized in that the digital receiving unit derives a recovered clock signal from the received digital signal by a self-clocking method, with successive data values contained in that digital signal being successively written into addresses of a buffer memory in synchronism with that recovered clock signal and being thereafter successively read out from the buffer memory in synchronism with a fixed-frequency clock signal that is generated within the digital receiving unit. The data signal that is thereby obtained by read-out from the buffer memory can then be converted to an analog signal which is completely free from the effects of jitter in the received digital signal.

A digital signal transmitting and receiving apparatus according to the present invention can thereby overcome the respective disadvantages of the prior art described above, by enabling a plurality of digital receiving units to be supplied with a common digital signal produced from a digital transmitting unit, yet with jitter effects being entirely eliminated.

More specifically, a digital signal transmitting and receiving apparatus according to the present invention comprises digital transmitting means for transmitting a digital signal containing data and clock signal components, and digital receiving means for receiving the transmitted digital signal, with the digital receiving means comprising:

signal interface means for deriving digital data and a recovered clock signal from the components of the transmitted digital signal;

means for generating a fixed-frequency clock signal having a frequency which is equal to a nominal frequency value of the recovered clock signal;

address signal generating means responsive to the recovered clock signal for generating successive write address values and responsive to the fixed-frequency clock signal for generating successive read address values; and

buffer memory means for successively storing the data produced from the signal interface means in successive addresses designated by the write address values and for reading out the data from successive addresses designated by the read address values to thereby obtain an output digital data signal.

BRIEF DESCRIPTION OF THE DRAWINGS

Fig 1 is a general block diagram of a prior art example of a digital signal transmitting and receiving apparatus which utilizes a self-clocking method of operation in a digital receiving unit;

Fig. 2 is a general block diagram of a prior art example of a digital signal transmitting and receiving apparatus which utilizes a master/slave relationship between a digital receiving unit and a digital transmitting unit;

Fig. 3 is a diagram to illustrate a digital audio interface format for a digital signal;

Fig. 4 is a general block diagram of an embodiment of a digital signal transmitting and receiving apparatus according to the present invention;

Fig. 5 is a conceptual diagram for illustrating a relationship between write addresses and read addresses of a buffer memory in the embodiment of Fig. 4; and

Fig. 6 is a block diagram showing an example of a circuit for generating write addresses and read addresses for the buffer memory of Fig. 5.

DESCRIPTION OF PREFERRED EMBODIMENTS

Fig. 4 is a general block diagram of a digital signal transmitting and receiving apparatus according to the present invention, in which a formatted digital signal is transmitted from a digital transmitting unit 51 to a digital receiving unit 52. The digital transmitting unit 51 includes a signal processing section 53, such as a a CD (compact disc) player, which produces an output digital signal on a signal line 58 and a corresponding clock signal on a signal line 59. The digital signal consists of successive digital data values, each representing a sample value of an audio signal. The clock signal is synchronized with successive bits of this digital signal (assuming serial data transmission to be utilized). The digital signal and clock signal of the lines 58 and 59 are inputted to a signal interface section 54, to be converted into a formatted digital signal for transmission to the digital receiving unit 52, using the digital audio interface format described hereinabove with reference to Fig. 3. In the digital receiving unit 52, this formatted digital signal is received by a signal interface section 55, which utilizes that signal to produce a recovered clock signal and to convert the formatted digital signal back to the original form of the digital signal which was supplied on line 58 to the signal interface section 54 of the digital transmitting unit 51, i.e. as successive audio sample data values. This recovered digital data signal and recovered clock signal are outputted from the signal interface section 55 on signal lines 61 and 62 respectively, to be supplied to a buffer memory section 56. As described hereinabove in describing the prior art examples, the formatted digital signal that is received by the digital receiving unit 52 will include jitter components, and these jitter components will also be present in the recovered digital signal and clock signal that are outputted from the signal interface section 55. However the recovered digital signal and clock signal will be mutually synchronized, in spite of the jitter components. The recovered clock signal can thus be used as in generating successive addresses of the buffer memory 56 into which data of the recovered digital data signal are written.

The digital receiving unit 52 also includes a signal processing section 57, which receives an output signal from the buffer memory section 56 consisting of successive data values (obtained by read-out of successive addresses of the buffer memory section 56), which corresponds to the digital signal originally outputted from the signal processing section 53 of the digital transmitting unit 51 on signal line 58. The signal processing section 57 includes a quartz crystal oscillator whose frequency of operation is determined by a quartz crystal vibrator $X_R$, whereby the signal processing section 57 generates an output clock signal whose frequency is fixed at a value which is nominally identical to that of the clock signal that is supplied on line 59 from the signal processing section 53 of the digital transmitting unit 51. This clock signal produced from the signal processing section 57 is used to generate successive addresses of the buffer memory in the buffer memory section 56, 56 from which data stored therein are read.

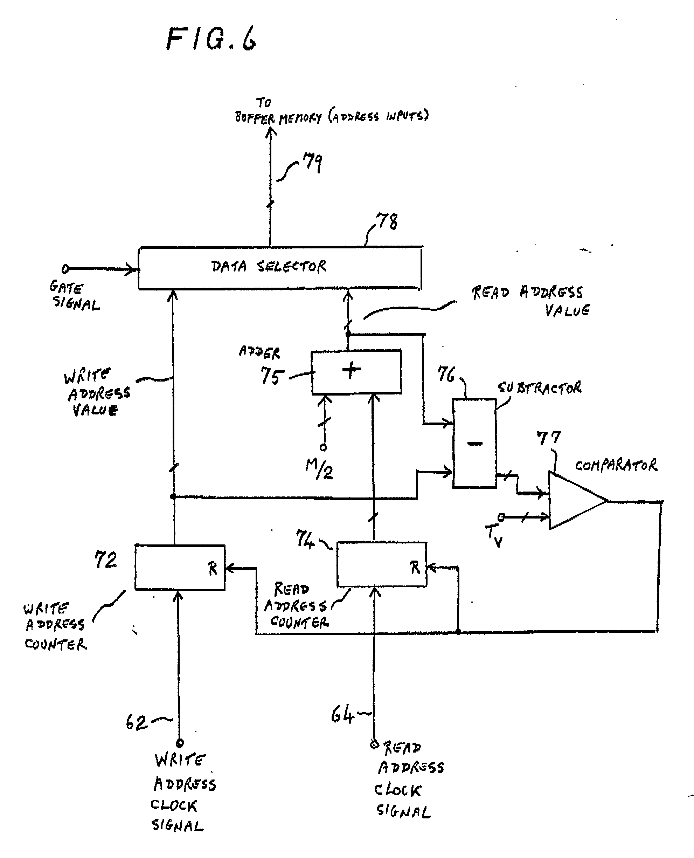

The buffer memory section 56 consists of a buffer memory and an address generating circuit, for generating write and read address values for the buffer memory. Fig. 5 is a conceptual diagram to illustrate the memory address relationships, and Fig. 6 is a general block diagram of the address generating circuit. In this embodiment, the buffer memory is of ring memory configuration. That is to say, as successive read or write address values are generated, when a maximum address value is exceeded, the next address value to be generated is a minimum value. Specifically, the aforementioned write address clock signal is supplied to a write address counter 72 in the address generating circuit of Fig. 6, and successive clock signal pulses counted thereby. When resetting of the write address counter 72 is executed (as described hereinafter), an initial (i.e. minimum) address value is generated by the write address counter 72, which is designated as WR(1) in Fig. 5. In response to the next pulse of the write address clock signal, the write address WR(2) is generated, and so on successively, i.e. incrementing of the write address counter 72 corresponds to clockwise movement around the circle of address values shown in Fig. 5. When a maximum count value of the write address counter 72 is reached, i.e. an address WR(M) is generated, then the next pulse of the write address clock signal will result in the write address WR(1) being generated. THus, write address generation is equivalent to successive rotations around the circle of Fig. 5. This is also true of read address generation by a read address counter 74 of the address generating circuit.

In this way, the data contained in the recovered clock signal from the signal interface section 55 are successively written into the buffer memory, with the successive write address being generated based on the recovered clock signal that has been derived from the received digital signal. Since any jitter component of the recovered digital signal will also be present in the recovered clock signal, this jitter will have no effect upon the accuracy of writing data into the buffer memory.

Each time that the write address counter 72 is reset, the read address counter 74 which generates successive memory read addresses is also reset to an initial condition. However the read address counter 74 is reset to an initial count value (designated RE(1) in Fig. 5) which differs from the initial count value (WR(1)) of the write address counter 72 by an amount which is equal to 1/2 of the total number of addresses of the buffer memory. Thus in Fig. 5, the reset address RE(1) is separated from the reset address WR(1) by 180°.

Specifically, assuming that each of the write address counter 72 and read address counter 74 is reset to an initial count value of 1, and that there is a total of M addresses in the buffer memory (where M is an integer), then WR(1) will be equal to 1 and RE(1) will be equal to M/2.

In this way, data which have been written into the buffer memory of the buffer memory section 56 in sync with the recovered clock signal from the signal interface section 55 can be subsequently read out from the buffer memory in synchronism with the fixed-frequency clock signal that is generated by the signal processing section 57, to obtain a digital signal on signal line 63 which is then converted to an analog audio signal by the signal processing section 57. Since the digital signal that is obtained by readout from the buffer memory will be completely free from jitter, there will be no adverse effect upon the quality of the audio signal that is produced from the signal processing section 57, irrespective of the amount of jitter contained in the formatted digital signal that is received by the digital receiving unit 52 from the digital transmitting unit 51.

Although the nominal value of the fixed-frequency clock signal from the signal processing section 57 (used as the read address clock signal in Fig. 6) is identical to that of the recovered clock signal that is used as the write address clock signal, these signals are not mutually frequency-locked. Thus, there will be some degree of frequency difference between the write address clock signal and read address clock signal of the buffer memory. As a result, after simultaneous resetting of the write address counter 72 and read address counter 74 has been executed, and writing and reading of the buffer memory to/from addresses WR(1) and RE(1) respectively begins, then although both the write and read address values can be considered to move in the clockwise direction around the ring of Fig. 5, there will be a fixed rate of relative movement between the read and write address values. For example, if the average frequency of the write address clock signal is higher than that of the read address clock signal, then the write addresses can be considered to move clockwise relative to the read addresses, and similarly the write addresses will move counter-clockwise relative to the read addresses if the frequency of the write address clock signal is lower than that of the read address clock signal. In addition, any jitter component of the write address clock signal will result in fluctuating small amounts of clockwise and counter-clockwise movement of the write address values relative to the read address values, as viewed in Fig. 5. As a result, a condition will eventually be reached in which the write and read addresses have approached coincidence, as illustrated by WR(P) and RE(P) in Fig. 5.

To ensure correct operation of the buffer memory, it is necessary to prevent such a condition from being reached, i.e. resetting of the write address counter 72 and read address counter 74 must be executed before such a condition can occur. This is achieved by the circuit of Fig. 6, as follows.

The write address value produced from the write address counter 72 is supplied to one set of inputs of a data selector 78 and to one set of outputs of a subtractor 76, and the count value produced from the read address counter 74 is supplied to one set of inputs of an adder 75. A value equal to half of the total number of addresses of the buffer memory (e.g. M/2) is supplied to the other set of inputs of the adder 75. The sum value that is thereby obtained from the adder 75, which constitutes the read address value, is supplied to the other set of inputs of the data selector 78 and to the other set of inputs of the subtractor 76. A gate signal applied to the data selector 78 controls the selection of the input signals applied thereto, i.e. when that gate signal is at the high logic level, the write address from the write address counter 72 is transferred out of the data selector 78 to be supplied to the buffer memory via signal lines 79, while when the gate signal is at the low logic level, the read address from the adder 75 is transferred out of the data selector 78 and supplied to the buffer memory via the signal lines 79. The gate signal is held at the high level during each write cycle of the buffer memory and at the low level during each read cycle.

The subtractor 76 serves to obtain the difference between the current write and read address values. This difference is compared (in a comparator 77) with a fixed threshold value $T^V$, which is selected to be sufficiently high to ensure that the condition shown as WR(P) and RE(P) in Fig. 5 will never be reached. That is to say, when the difference between the write and read address values falls to this threshold value (as a result of a frequency difference between the write address clock signal and read address clock signal as described above), a reset signal is generated from the comparator 77 which is applied to respective reset input terminals of the write address counter 72 and read address counter 74. Thus when such a reset operation occurs, the write and read address values are respectively set to the initial values WR(1) and WR(2) shown in Fig. 5, i.e. values which provide maximum separation between the write and read addresses, and mutually independent counting operations by the write address counter 72 and read address counter 74 are continued from that condition. It will be apparent that the frequency of repetition of such resetting operations will depend upon with the amount of frequency difference between the write address clock signal and read address clock signal.

It can thus be understood from the above that the present invention enables two mutually independent clock signals to be utilized for write and read operations of the buffer memory, i.e. a recovered clock signal obtained by self-clocking operation is used in write operations, while a fixed-frequency clock signal generated from a quartz crystal oscillator is used for read operations. Thus, the effects of jitter in the received formatted digital signal from the digital transmitting unit 51 are completely eliminated from the analog audio signal that is obtained from the signal processing section 57.

It will be apparent that various modifications to the described embodiment could be envisaged. For example, the specific circuit arrangement shown in Fig. 6 is given only for ease of understanding of the address generating circuit functions. Moreover although an adder 75 is used in the above embodiment for establishing the required difference between the write and read address values, it would be equally possible to use a presettable counter as the read address counter, and preset that to the count value M/2 each time a counter reset operation is executed.

In addition, it would be possible to envisage other arrangements than the subtractor/comparator circuit configuration of Fig. 6, for preventing the conditions WR(P), RE(P) shown in Fig. 5 from being reached during operation of the ring memory.

Moreover although the above embodiment utilizes a ring memory configuration, it would be possible to use other types of memory address arrangement.

A digital signal transmitting and receiving apparatus includes a transmitting unit (51) producing a transmitted digital signal which is formatted to enable self-clocking operation of a receiving unit (52), and a recovered clock signal generated thereby in the receiving unit is used in writing successive received data values into a buffer memory (56). Readout of data from the buffer memory is based on a fixed-frequency clock signal which is independent of the recovered clock signal, so that an output data signal can be obtained which is free from the effects of jitter contained in the input digital signal supplied to the receiving unit.

## Claims

1. A digital signal transmitting and receiving apparatus comprising digital transmitting means for transmitting a digital signal containing data and clock signal components, and digital receiving means for receiving said transmitted digital signal, said digital receiving means comprising:

signal interface means for deriving digital data and a recovered clock signal from said components of said transmitted digital signal;

means for generating a fixed-frequency clock signal having a frequency which is equal to a nominal frequency value of said recovered clock signal;

address signal generating means responsive to said recovered clock signal for generating successive write address values and responsive to said fixed-frequency clock signal for generating successive read address values; and

buffer memory means for successively storing said data produced from said signal interface means in successive addresses designated by said write address values and for reading out said data from successive addresses designated by said read address values to thereby obtain an output digital data signal.

2. A digital signal transmitting and receiving apparatus according to claim 1, in which said buffer memory means has a ring memory address configuration, and in which said address signal generating means further comprises means for detecting when a difference between said write address values and read address values falls to a predetermined threshold value, and for resetting said write and read address values when said threshold value is reached, to respective initial values which make said difference greater than said threshold value.

## FIG.1　　　　　　PRIOR ART

Digital transmitting
unit

16

Signal interface
section

22

23

18

X1

Signal processing
section

19

24

Digital receiving
unit

17

Signal interface
section

25

26

20

VCO

21

o27

Signal processing
section

## FIG.2　　PRIOR ART

Digital transmitting
unit

28

Signal processing
section

34

35

30

31

Signal interface
section

36

38

Digital receiving
unit

29

Signal processing
section

37

32

33

o39

Signal interface
section

X2

# FIG.3

32 bits

41  42                                              43    44  45  46

V  U  C  P                                          47

Audio sample word

0    34    78                                       27 28        31

Synchronizing     preparatory                       Control signals
preamble          bits

EP 0 374 794 A2

# FIG.4

Digital transmitting unit 51

Digital receiving unit 52

Signal processing section

Signal interface section

Signal interface section

Buffer memory section

Signal processing section

53  58  59  54  60  55  61  62  56  64  63  57  65

Xs

XR

EP 0 374 794 A2

# FIG.5

# FIG.6

TO
BUFFER MEMORY (ADDRESS INPUTS)

79

78

| DATA SELECTOR |

GATE
SIGNAL

READ ADDRESS
VALUE

WRITE
ADDRESS
VALUE

ADDER
75    +

76
SUBTRACTOR

−

M/2

77
COMPARATOR

T_v

72    R

WRITE
ADDRESS
COUNTER

74    R

READ
ADDRESS
COUNTER

62
WRITE
ADDRESS
CLOCK
SIGNAL

64
READ
ADDRESS
CLOCK
SIGNAL